# EUROPÄISCHE PATENTSCHRIFT

(11) **EP 0 444 298 B1**
(45) Veröffentlichungstag und Bekanntmachung des Hinweises auf die Patenterteilung: **15.12.1993**
(21) Anmeldenummer: 90125055.5
(22) Anmeldetag: 20.12.1990
(51) Int. Cl.: B25B 7/22

(54) **Arbeitszange**
Working pliers
Pince de travail

(30) Priorität: 27.02.1990 DE 4006111
(43) Veröffentlichungstag der Anmeldung: 04.09.1991
(73) Patentinhaber: ORBIS-Werk Groten GmbH + Co. KG, 48683 Ahaus (DE)
(72) Erfinder: Kalthoff, Ferdinand, W-4419 Laer (DE)
(74) Vertreter: Habbel, Hans-Georg, Dipl.-Ing.

(56) Entgegenhaltungen:
- FR-A- 475 530
- US-A- 736 435
- US-A- 4 658 456

## Beschreibung

Die Erfindung bezieht sich auf eine Arbeitszange gemäß dem Oberbegriff des Hauptanspruches.

Aus der US-A-43 37 542 ist eine gattungsbildende Arbeitszange bekannt, die insbesondere für elektrotechnische Zwecke eingesetzt wird und es ermöglicht, verschiedene Kabelstärken abzuisolieren, Kabel durchzuschneiden, Kabelenden zu sicken und Ösen zusammenzudrücken. Um unterschiedlich große Ösen bearbeiten zu können, sind in der einen Zangenhälfte abgerundete konvexe Vorsprünge vorgesehen und in der anderen Zangenhälfte abgerundete konkave Nuten, wobei die Vorsprünge im zusammengedrückten Zustand der Zangenhälften in die Nuten vorstehen, aber kleiner als der Umfang der Nuten sind. Mit dieser Zange werden also nicht gleichzeitig zwei Biegungen erreicht, sondern die zwei zusammenwirkenden konkaven Nuten und Vorsprünge dienen zur Behandlung unterschiedlich großer Bauteile. Die Nuten erstrecken sich quer zu den Zangenhälften und auch die Vorsprünge sind quer zu den Zangenhälften ausgerichtet.

Aus der US-A-41 04 752 ist eine Vielzweckzange bekanntgeworden, bei der u. a. durch zusammenwirkende Vorsprünge und Nuten eine Formgebung eines Kabels erfolgen kann. Auch hier sind die Nuten und die Vorsprünge quer zur Längsachse der Griffteile der Zange ausgerichtet.

Für das Biegen von Drähten in der Dentaltechnik und Kieferorthopädie, z. B. zum Herstellen von Zahnspangen und anderen Korrekturhilfen, werden heute jedoch eine Vielzahl unterschiedlichster Zangen eingesetzt, wobei drei große Typen unterschieden werden, nämlich die sogenannten "Schneidezangen", die "Haltezangen" und die "Formzangen"

Als Schneidezangen werden üblicherweise Seitenschneider eingesetzt.

Mit den Haltezangen hält man den Draht fest, formt den Draht durch Biegen z. B. um eine Backe der Zange. Die Backen können dabei konisch oder zylindrisch geformt sein.

Als Formzangen sind Zangen im Handel, die den Draht an mehr als zwei Punkten angreifen und die beim Zusammendrücken den Draht mehr oder weniger knicken.

Diese Aufstellung zeigt, daß die kieferorthopädischen Zahntechniker eine Vielzahl von Zangen benötigen. Der Erfindung liegt die Aufgabe zugrunde, eine Arbeitszange zu schaffen, die Schneide-, Halte- und Formfunktion zu erfüllen in der Lage ist.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, schlägt die Erfindung eine Arbeitszange vor, mit der ein Draht gleichmäßig rund gebogen werden kann. Gleichzeitig ist ein V-förmiges Biegen und rechtwinkliges Abbiegen möglich. Die Zange ermöglicht ein drehsicheres Festhalten von Drähten für manuelle Biegeprozesse und der Seitenschneider ermöglicht das gewünschte Kürzen des Drahtes. Die Riffelung des einen Wirkteiles auf dessen Innenseite ergibt eine gute Halterung des Drahtes bei handformenden Vorgängen und an den Spitzen, d. h. den freien Enden der Wirkteile sind Kehlvorrichtungen vorgesehen, die z. B. ein Zusammenbiegen U-förmiger Drähte ermöglichen.

Ein Ausführungsbeispiel der Erfindung wird nachfolgend anhand der Zeichnungen erläutert. Die Zeichnungen zeigen dabei in
- Fig. 1: eine Arbeitszange von der einen Seite gesehen und in
- Fig. 2: die Arbeitszange gemäß Fig. 1 von der anderen Seite gesehen, in
- Fig. 3: einen Schnitt gemäß der Linie 3 - 3 in Fig. 1, in
- Fig. 4: in den Teilen a bis f die Herstellung einer Adams-Klammer, in
- Fig. 5: einen U-Bügel und in
- Fig. 6: einen Labialbogen.

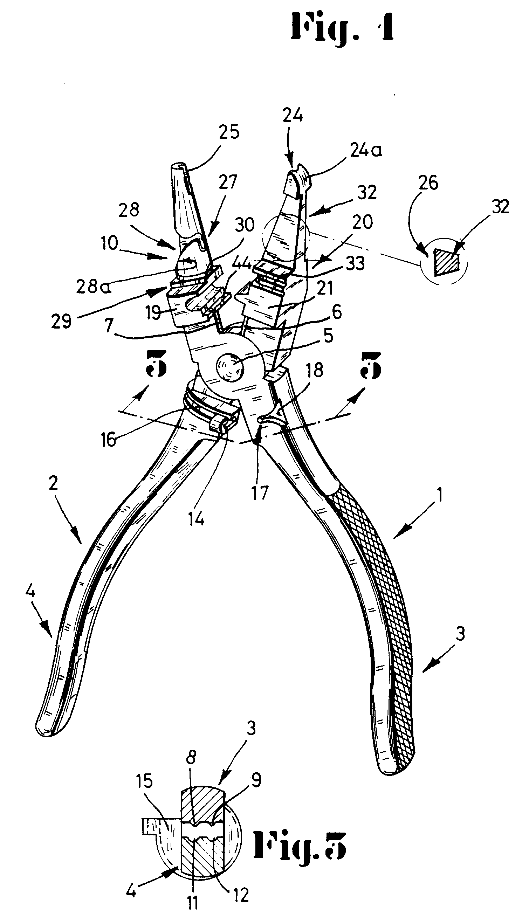

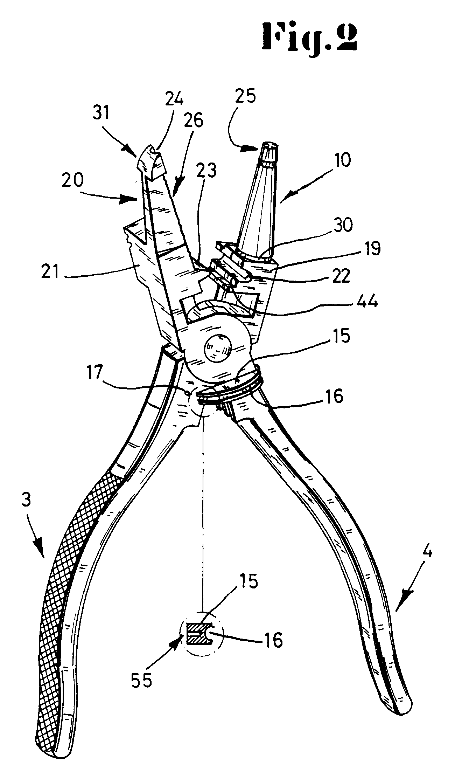

Insbesondere in den Fig. 1 und 2 ist eine Zange dargestellt, die aus zwei Zangenhälften 1 und 2 besteht, wobei jede Zangenhälfte 1 oder 2 ein Griffteil 3 bzw. 4 und ein Wirkteil 10 bzw. 20 aufweist. Die beiden Zangenhälften 1 und 2 sind im Bereich eines Gelenkes 5 aneinander drehbar festgelegt, wie dies an sich bekannt ist. Seitenschneiderschneiden 6 und 7 sind erkennbar und befinden sich an der einen Seite der Wirkteile 10 bzw. 20.

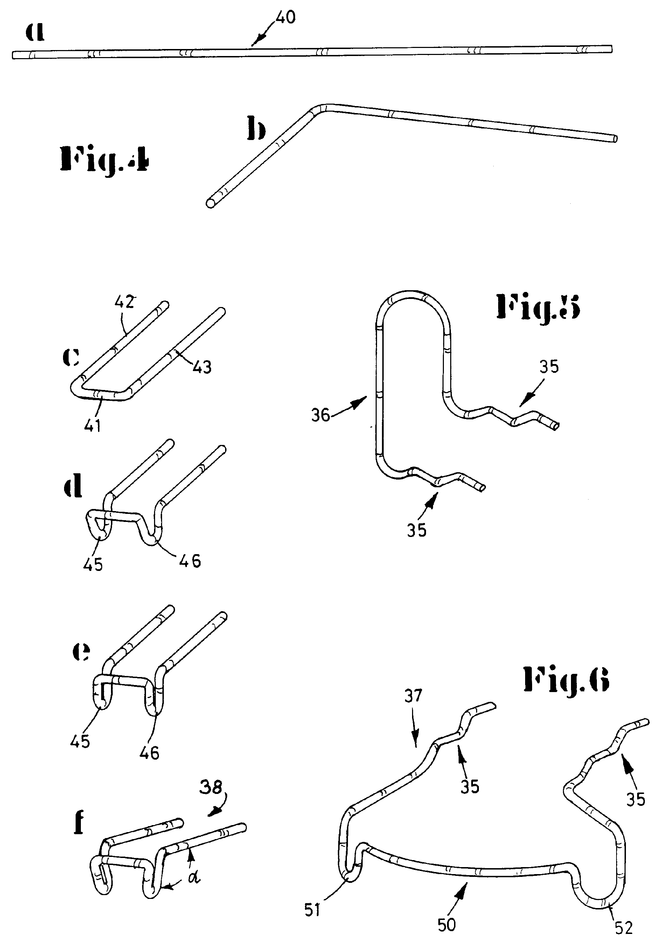

An den gelenkseitigen Enden der Griffteile 3 und 4 ist eine Vorrichtung zur Herstellung von Retentionen vorgesehen. Hierzu sind in dem ersten Griffteil 3 an der Innenseite nach innen vorstehende konvexe Vorsprünge 8 und 9 vorgesehen und an dem zweiten Griffteil 4 Nuten 11 und 12, wobei die Vorsprünge 8 und 9 einen kleineren Umfang oder kleiner ausgebildet sind als der Raum der Nuten 11 und 12, so daß dadurch ein Einlegen eines Drahtes zur Herstellung einer Retention möglich ist, wie dies noch nachfolgend erläutert werden wird.Die Retentionen sind in den Fig. 5 und 6 bei 35 erkennbar.

Weiterhin sind im gelenkseitigen Bereich der Griffteile 3 und 4 an dem zweiten Griffteil 4 ein Festhaltehaken 14 vorgesehen, der mit einem Bogen 15 in Verbindung steht, der - wie dies die Fig. 2 zeigt - an der Rückseite der Zange weit über das erste Griffteil 3 greift. Dieser Bogen 15 weist eine Nut 16 auf, die nach außen offen ist und das Einlegen und damit sichere Halten eines Drahtes gewährleistet, wie dies beispielsweise beim Herstellen eines Labialbogens 37 gemäß Fig. 6 erforderlich ist.

In dem ersten Griffteil 3 ist - wie dies Fig. 1 erkennen läßt - eine parallel zur Gelenkachse des Gelenkes 5 verlaufende Bohrung 17 vorgesehen, die an der Außenseite des ersten Griffteiles 3 mit einer Einführöffnung 18 in Verbindung steht, die trichterförmig gestaltet ist. Die Bohrung 17 durchquert das ganze Griffteil 3 und an der Innenseite des Bogens 15 befindet sich eine kleine Ausnehmung 55 (siehe Fig. 2), die im zusammengeschobenen Zustand der Griffteile 3 und 4 gegenüber der Mündung der Bohrung 17 liegt, so daß, wenn in die Bohrung 17 ein Draht eingesteckt ist, dieser durch das erste Griffteil 3 hindurch in die kleine Ausnehmung 55 im zweiten Griffteil 4 greift. Werden nunmehr die Griffteile 3 und 4 auseinanderbewegt, wird aufgrund der dann auftretenden Scherwirkung der Draht in den Bohrungen 17 und 55 festgehalten. Auch diese Anordnung liegt noch im Bereich des ersten Griffteiles 3 vor dem Gelenk 5.

In den Wirkteilen 10 und 20 sind Blockkörper 19 und 21 vorgesehen, die sich quer zur Längsachse der Wirkteile 10 und 20 erstrecken. Der Blockkörper 19 weist dabei eine Nut 22 auf und im Bereich der Begrenzung der Nut 22 einen Anschlag 44. Der Blockkörper 21 besitzt einen Vorsprung 23, der in die Nut 22 greifen kann und dabei kleiner in seinem Umfang gestaltet ist als der Umfang der Nut 22, so daß auch hier das Einlegen eines Drahtes und Verformen desselben möglich ist.

Außerdem ist an der Außenseite des Blockkörpers 19 eine Anlagekante 29 angeformt und der weiter nach vorne gerichtete Teil des ersten Wirkteiles 10 ist rund und konisch gestaltet und läuft damit nach vorne hin spitz zu. Im Übergangsbereich vom Blockkörper 19 zum übrigen Teil des ersten Wirkteiles 10 ist eine Rille 30 vorgesehen.

Außerdem ist an der Innenseite des ersten Wirkteiles 10 eine Nut 27 ausgearbeitet, die mit einer trichterförmigen Öffnung 28 in Verbindung steht, wobei die Randkanten dieser trichterförmigen Öffnung mit 28a bezeichnet sind und zur Anlage eines Drahtes dienen.

Anschließend an den Blockkörper 21 im zweiten Wirkteil 20 nach vorne, d. h. zum freien Ende hin ist eine Rillenführung 33 vorgesehen und dann ist der zweite Wirkteil 20 als Vierkantkörper 32 ausgebildet. Die Innenseite des zweiten Wirkteiles 20 weist eine geriffelte Fläche 26 auf. Die Breite der geriffelten Fläche 26 ist größer als die Rückseite des zweiten Wirkteiles 20, so daß dadurch ein Abbiegen des Drahtes möglich ist und der eingeschlossene Winkel kleiner als 90° ist (siehe Schnittdarstellung in Fig. 1).

Der Vierkantkörper 32 geht dann in Richtung der Längsachse der Wirkteile 10, 20 in eine gewölbte Fläche 24a über und auf der Innenseite des zweiten Wirkteiles 20 ist eine Nut 24 vorgesehen, der eine Nut 25 am Wirkteil 10 gegenüberliegt. Die gewölbte Fläche 24a ist an einem amboßartigen Endteil 31 vorgesehen.

In Fig. 4 und dort in Fig. a bis f ist die Herstellung und Gestaltung einer Adamsklammer 38 erläutert.

In Fig. 5 ist ein sogenannter U-Bügel 36 und in Fig. 6 ein Labialbogen 37 dargestellt.

Die Arbeitsweise mit der neuen Arbeitszange wird nachfolgend anhand einiger Beispiele erläutert:

### 1. Herstellung einer Retention:

Zur Herstellung einer Retention, d. h. einer besseren Verankerung des an sich sehr glatten Drahtes einer Dentalklammer od. dgl. in Kunststoff, werden die freien Enden eines Drahtstückes quer zur Längsachse der Griffteile 3, 4 bei geöffneten Griffteilen 3, 4 in den Raum zwischen die konvexen Vorsprünge 8, 9 bzw. die Nuten 11, 12 eingeführt (Fig. 3) und dann wird durch Zusammenpressen der Griffteile 3, 4 dem Draht eine entsprechende Wölbung gegeben. Solche Retentionen sind in Fig. 5 und 6 bei 35 anhand eines U-Bügels 36 bzw. eines Labialbogens 37 dargestellt.

### 2. Herstellen einer "Adams"-Klammer:

Zur Herstellung einer Adams-Klammer 38, wie sie in Fig. 4 dargestellt ist, wird von einem geradlinigen, glatten Drahtstück 40 gemäß Fig. 4a ausgegangen, das zwischen die Wirkteile 10 und 20 eingelegt wird und durch die geriffelte Fläche 26 des zweiten Wirkteiles 20 an das erste Wirkteil 10 angedrückt wird. Anschließend wird dieses zwischen den beiden Wirkteilen 10 und 20 gefaßte Drahtstück rechtwinklig über den Vierkantkörper 32 nach unten hin abgebogen. Da die gerillte Fläche 26 breiter als die Unterseite des Vierkantkörpers 32 des Wirkteiles 20 ist, erfolgt eine Abbiegung über 90°, d.h. der zwischen den beiden Schenkeln des Drahtstückes 40 eingeschlossene Winkel ist erst einmal kleiner als 90° und kann dann zurückgebogen werden. Dies ist erforderlich, weil das Drahtstück 40 entsprechende federnde Eigenschaften besitzt. Dieses winklig abgebogene Drahtstück ist in Fig. 4 bei b dargestellt. In gleicher Weise wird dann das winkelförmige Drahtstück gemäß Fig. 4b zu einem U-Stück gemäß Fig. 4c mit Rücken 41 und Schenkel 42, 43 umgebogen und die Schenkel 42 und 43 entsprechend verkürzt.

Dieses U-Stück gemäß Fig. 4c wird dann parallel zu der Längsachse der beiden Wirkteile 10 und 20 soweit in das Maul dieser Wirkteile 10 und 20 eingeschoben, bis der Rücken 41 des U-förmigen Bügels gemäß Fig. 4c zur Anlage an dem Anschlag 44 des ersten Wirkteiles 10 kommt. Durch Zusammendrücken der beiden Griffteile 3 und 4 wird nunmehr der Vorsprung 23 des Blockkörpers 21 in die Nut 22 des Blockkörpers 19 eingepreßt und damit die "Füßchen" 45 und 46 gemäß Fig. 4d der Klammer hergestellt.

Wie aus Fig. 4d ersichtlich, sind die Füßchen 45, 46 V-förmig ausgebildet, d. h. sie öffnen sich relativ weit nach oben und sie müssen zur besseren Fassung des Zahnes zusammengedrückt werden. Dies erfolgt derart, daß das Füßchen 45 bzw. 46 in die Nut 27 des ersten Wirkteiles 10 eingelegt wird und dann durch Zusammenführen der Griffteile 3 und 4 die geriffelte Fläche 26 auf die Oberseite des Füßchens aufgepreßt wird, das derart dann in die in Fig. 4c dargestellte Form umgewandelt wird.

Aus der Darstellung in Fig. 4e ist erkennbar, daß der Winkel zwischen den Schenkeln 43 bzw. 42 und den nach unten gerichteten Schenkeln der Füßchen 45 und 46 größer als 90° ist. Es ist aber erforderlich, daß dieser Winkel kleiner als 90°, vorzugsweise etwa α gleich 80° ist. Hierzu wird der Schenkel des in der Nut 27 festgehaltenen Füßchens über die trichterförmige Öffnung 28 und dort die Kante 28a gebogen, so daß dann der in Fig. 4f erkennbare kleinere Winkel α etwa gleich 80° erzielt wird.

Weiterhin ist es erforderlich, daß die Füßchen 45 und 46 wie aus Fig. 4f ersichtlich nach unten hin aufeinanderzu angestellt sind.

Hierzu wird das Füßchen 45 gemäß Fig. 4e in den Nuten 24 und 25 festgelegt und der überstehende Schenkel über die gewölbte Fläche 24a abgebogen. Durch diese Arbeitsweise wird das dann endgültig fertig in Fig. 4f dargestellte Füßchen 45 bzw. 46 erzielt.

Die freien Schenkel 42 und 43 könnten dann noch mit einer Retention 35 versehen werden.

### 3. Herstellen eines U-Bügels:

Zur Herstellung des in Fig. 5 dargestellten U-Bügels 36 wird ein Drahtstück 40 in das mit der trichterförmigen Öffnung 18 versehene Loch 17 des ersten Griffteiles 3 eingesetzt, wobei die Griffteile 3, 4 einander genähert sind, derart, daß die Rückseite des Bogens 15 das in Fig. 2 erkennbare Loch 17 verschließt und das Drahtende in die kleine Ausnehmung 55 ragt. Durch Abbiegen des aus dem Loch 17 vorstehenden Drahtstückes quer zur Längsachse des ersten Griffteiles 3 wird eine erste Abwinkelungerreicht und dann kann durch Abbiegen über die gewölbten Flächen der Einführöffnung 18 entweder nach rechts oder links ein nach rechts oder links ausgerichteter U-Bogen erzielt werden.

Dann wird das andere Ende des Drahtstückes in die Bohrung 17 eingesetzt und die beiden Griffteile 3 und 4 etwas geöffnet, so daß aufgrund der Scherwirkung das Drahtstück fest in dieser Bohrung 17 und der Ausnehmung 55 gehalten wird.

Dann wird wiederum durch entsprechendes Abbiegen und Anlegen an die Kanten der Einführöffnung ein U-Bogen erzielt. Anschließend wird dieses mit den zwei Bögen ausgerüstete Drahtteil mit einem Bogen in die Rillenführung 33 eingesetzt und durch Zusammenpressen der Griffteile 3 und 4 festgelegt. Hierbei legt sich der Draht in die Rille 30 des ersten Wirkteiles 10 ein und wird festgelegt und kann nunmehr durch Umbiegen um das rund ausgebildete erste Wirkteil 10 entsprechend gebogen werden, so daß dann der in Fig. 5 dargestellte U-Bügel 36 mit seinen beiden abstehenden Schenkeln, die bei der Anordnung gemäß Fig. 5 bereits mit einer Retention 35 versehen sind, hergestellt wird. Natürlich wird die Retention 35 erst nach Herstellen des U-Bügels 36 eingepreßt.

### 4. Herstellen eines Labialbogens:

Zur Herstellung des in Fig. 6 dargestellten Labialbogens 37 wird ein Drahtstück 40 etwa mittig an dem Festhaltehaken 14 des Bogens 15 festgelegt und dann wird durch Drehen der Arbeitszange und Festhalten des freien Endes des Drahtstückes eine dem Bogen 15 und der in diesem Bogen vorhandenen Nut 16 entsprechende Biegung erstellt. Diese Biegung entspricht der in Fig. 6 bei 50 dargestellten Biegung.

Die sich an die Endbereiche der Biegung 50 anschließenden Schlaufen 51 und 52 werden dann durch Einlage des Arbeitsdrahtes an der gerillten Fläche 26 und Durchführen verschiedener Biegungen um den Vierkantkörper 32 bzw. den konischen Teil des ersten Wirkteiles 10 erreicht.

Das Abschneiden der freien Schenkel der verschiedenen vorbeschriebenen Teile erfolgt mit Hilfe der Seitenschneiderschneiden 6 und 7.

Auch hier wird dann wieder in dem freien Endbereich des Labialbogens 37 die Retention 35 angebracht.

## Patentansprüche

1. Arbeitszange, insbesondere für die Dentaltechnik mit um ein Gelenk (5) beweglichen, je ein Griffteil (3, 4) und ein Wirkteil (10, 20) aufweisenden Zangenhälften (1, 2), wobei im ersten Wirkteil (10) und im zweiten Wirkteil (20) zusammenwirkende Seitenschneiderschneiden (6, 7) vorgesehen sind und im gelenknahen Bereich der Griffteile (3, 4) in der einen Zangenhälfte (1 oder 2) ein abgerundeter, konvexer Vorsprung und in der anderen Zangenhälfte (2 oder 1) eine abgerundete, konkave Nut vorgesehen ist, wobei der konvexe Vorsprung in die konkave Nut eingreift und kleiner als die Nut ist, dadurch gekennzeichnet, daß wenigstens zwei konvexe Vorsprünge (8, 9) und wenigstens zwei konkave Nuten (11, 12) vorgesehen sind, die jeweils in Richtung der Längsachse der Griffteile (4, 5) ausgerichtet sind.

2. Arbeitszange nach Anspruch 1, dadurch gekennzeichnet, daß im gelenknahen Bereich an dem zweiten Griffteil (4) ein parallel zur Gelenkachse des Gelenkes (5) vorstehender Festhaltehaken (14) vorgesehen ist, an den sich ein das zweite Griffteil (4) überwölbender Bogen (15) anschließt, der eine in seiner Längsachse verlaufende Nut (16) aufweist.

3. Arbeitszange nach Anspruch 1 oder 2, dadurch gekennzeichnet, daß im gelenknahen Bereich des ersten Griffteiles (3) eine parallel zur Gelenkachse des Gelenkes (5) verlaufende Bohrung (17) vorgesehen ist, die eine trichterförmige Einführöffnung (18) besitzt und an der gegenüberliegenden Seite verschlossen oder verschließbar ist.

4. Arbeitszange nach Anspruch 2 oder 3, dadurch gekennzeichnet, daß an der Rückseite des Bogens (15) der Mündung der Bohrung (17) gegenüberliegend eine dem Durchmesser der Bohrung (17) entsprechende Ausnehmung (55) vorgesehen ist.

5. Arbeitszange nach einem oder mehreren der vorhergehenden Ansprüche, dadurch gekennzeichnet, daß in den Wirkteilen (10, 20) quer zur Längsachse der Wirkteile (10, 20) ausgerichtete Blockkörper (19, 21) vorgesehen sind, von denen der eine Blockkörper (z. B. 19) eine an ihrem Nutboden abgerundet ausgebildete Nut (22) und der andere Blockkörper (z. B. 21) einen in die Nut (22) greifenden Vorsprung (23) aufweist, wobei der Vorsprung (23) kleinere Abmessungen aufweist als die Nut (22).

6. Arbeitszange nach einem oder mehreren der vorhergehenden Ansprüche, dadurch gekennzeichnet, daß die Wirkteile (10, 20) im vorderen Bereich auf ihren aufeinanderzu gerichteten Seiten mit in Richtung der Längsachse der Wirkteile (10, 20) verlaufenden Nuten (24 und 25) ausgerüstet sind.

7. Arbeitszange nach einem oder mehreren der vorhergehenden Ansprüche, dadurch gekennzeichnet, daß das erste Wirkteil (10) im Querschnitt rund und in Längsrichtung konisch zum freien Ende hin zulaufend ausgebildet ist und die Nut (24) in dem zweiten Wirkteil (20) eine solche Größe aufweist, das sie das Ende des ersten Wirkteiles (10) aufnimmt.

8. Arbeitszange nach einem oder mehreren der vorhergehenden Ansprüche, dadurch gekennzeichnet, daß die Innenseite des zweiten Wirkteiles (20) als geriffelte Fläche (26) ausgebildet ist.

9. Arbeitszange nach einem oder mehreren der vorhergehenden Ansprüche, dadurch gekennzeichnet, daß in dem ersten Wirkteil (10) auf der Innenseite eine sich in Längsachse des ersten Wirkteiles (10) erstreckende Nut (27) vorgesehen ist, die sich zur Seite hin und zum freien Ende hin öffnet, wobei die Öffnung trichterförmig (bei 28) ausgebildet ist.

10. Arbeitszange nach einem oder mehreren der vorhergehenden Ansprüche, gekennzeichnet durch eine Anlagekante (29) am ersten Wirkteil (10), die sich quer zur Achse des Gelenkes (5) und quer zur Längsachse des ersten Wirkteiles (10) erstreckt und am Blockkörper (19) vorgesehen ist.

11. Arbeitszange nach einem oder mehreren der vorhergehenden Ansprüche, dadurch gekennzeichnet, daß parallel zu der Nut (22) des Blockkörpers (19) über dem die Nut (22) zum Gelenkbereich hin begrenzenden Rand ein Anschlag (44) angeordnet ist.

12. Arbeitszange nach einem oder mehreren der vorhergehenden Ansprüche, dadurch gekennzeichnet, daß das erste Wirkteil (10) zum Blockkörper (19) hin unter Zwischenschaltung einer umlaufenden Rille (30) endet.

13. Arbeitszange nach einem oder mehreren der vorhergehenden Ansprüche, dadurch gekennzeichnet, daß das zweite Wirkteil (20) als konisch nach vorne zulaufender Vierkantkörper (32) ausgebildet ist, der sich vom Blockkörper (21) zum freien Ende hin verjüngt und am freien Ende amboßartig (bei 31) ausgebildet ist.

14. Arbeitszange nach einem oder mehreren der vorhergehenden Ansprüche, dadurch gekennzeichnet, daß am Übergang vom Vierkantkörper (32) zum Blockkörper (21) eine Rillenführung (33) vorgesehen ist.

## Claims

1. Working pliers, especially for dental technology, comprising plier halves (1, 2) movable about a joint (5) and each comprising a handle part (3, 4) and an active part (10, 20), interacting side cutter cutting edges (6, 7) being provided in the first active part (10) and in the second active part (20) and a rounded, convex projection being provided in the one plier half (1 or 2) in the area of the handle parts (3, 4) near the joint and a rounded, concave groove being provided in the other plier half (2 or 1), the convex projection engaging in the concave groove and being smaller than the groove, characterized in that at least two convex projections (8, 9) and at least two concave grooves (11, 12) are provided which are each oriented in the direction of the longitudinal axes of the handle parts (4, 5).

2. Working pliers according to claim 1, characterized in that a fastening hook (14) projecting in parallel with the axis of articulation of the joint (5) is provided in the area near the joint on the second handle part (4), to which fastening hook (14) there is attached a curved member (15), which over-arches the second handle part (4) and comprises a groove (16) running along its longitudinal axis.

3. Working pliers according to claim 1 or claim 2, characterized in that a bore (17) running parallel to the axis of articulation of the joint (5) is provided in the area of the first handle part (3) near the joint, said bore (17) having a funnel-shaped inlet opening (18) and being closed or closable at the opposite side.

4. Working pliers according to claim 2 or claim 3, characterized in that a recess (55) corresponding to the diameter of the bore (17) is provided at the rear of the curved member (15) and opposite the mouth of the bore (17).

5. Working pliers according to any one of the preceding claims, characterized in that block members (19, 21) are provided in the active parts (10, 20) perpendicularly to the longitudinal axes of the active parts (10, 20), one of which block members (e.g. 19) comprises a groove (22) of rounded construction at its groove base and the other of which block members (e.g. 21) comprises a projection (23) engaging in the groove (22), the projection (23) having smaller dimensions than the groove (22).

6. Working pliers according to any one of the preceding claims, characterized in that the active parts (10, 20) are provided, in the front area on their sides facing each other, with grooves (24 and 25) running in the direction of the longitudinal axes of the active parts (10, 20).

7. Working pliers according to any one of the preceding claims, characterized in that the first active part (10) is constructed with a round cross-section and to be conical in the longitudinal direction towards the free end and in that the groove (24) in the second active part (20) is of such a size that it accommodates the end of the first active part (10).

8. Working pliers according to any one of the preceding claims, characterized in that the inside of the second active part (20) is constructed as a corrugated surface (26).

9. Working pliers according to any one of the preceding claims, characterized in that a groove (27) extending along the longitudinal axis of the first active part (10) is provided in the first active part (10) on the inside, said groove (27) being open to the side and at the free end, the opening being of funnel-shaped construction (at 28).

10. Working pliers according to any one of the preceding claims, characterized by a bearing edge (29) on the first active part (10) which extends perpendicularly to the axis of the joint (5) and perpendicularly to the longitudinal axis of the first active part (10) and is provided on the block member (19).

11. Working pliers according to any one of the preceding claims, characterized in that a limit stop (44) is arranged parallel to the groove (22) of the block member (19) over the edge defining the groove (22) with respect to the joint area.

12. Working pliers according to any one of the preceding claims, characterized in that the first active part (10) ends towards the block member (19) with the interposition of an encircling channel (30).

13. Working pliers according to any one of the preceding claims, characterized in that the second active part (20) is constructed as a square member (32) running conically forwards, which square member (32) tapers from the block member (21) towards the free end and is constructed in the manner of an anvil (at 31) at the free end.

14. Working pliers according to any one of the preceding claims, characterized in that a channel guide (33) is provided at the transition point from square member (32) to block member (21).

## Revendications

1. Pince de travail, en particulier pour la technique dentaire, comportant des moitiés de pince (1, 2) mobiles autour d'une articulation (5), présentant chacune une partie formant poignée (3, 4) et une partie active (10, 20), des lames de pince diagonale (6, 7) coopérantes étant prévues dans la première partie active (10) et la seconde partie active (20) et une saillie arrondie convexe étant prévue dans la zone des parties formant poignées (3, 4) proche de l'articulation dans une moitié de pince (1 ou 2) et une rainure arrondie concave dans l'autre moitié de pince (2 ou 1), la saillie convexe venant en prise dans la rainure concave et étant plus petite que la rainure, caractérisée en ce qu'il est prévu au moins deux saillies convexes (8, 9) et au moins deux rainures concaves (11, 12), qui sont orientées chacune dans la direction de l'axe longitudinal des parties formant poignées (4, 5).

2. Pince de travail selon la revendication 1, caractérisée en ce qu'il est prévu au voisinage de l'articulation, sur la première partie formant poignée (4), un crochet de maintien (14) faisant saillie parallèlement à l'axe de l'articulation (5), sur lequel se raccorde un arc (15) faisant saillie de la seconde partie formant poignée (4), et qui présente une rainure (16) orientée selon son axe longitudinal.

3. Pince de travail selon l'une des revendications 1 ou 2, caractérisée en ce qu'il est prévu au voisinage de l'articulation de la première partie formant poignée (3) un trou (17) s'étendant parallèlement à l'axe de l'articulation (5), et possédant une ouverture d'introduction (18) en forme d'entonnoir et qui est fermé ou peut être fermé sur le côté opposé.

4. Pince de travail selon l'une des revendications 2 ou 3, caractérisée en ce qu'il est prévu sur le côté postérieur de l'arc (15), face à l'embouchure du trou (17), un évidement (55) correspondant au diamètre du trou (17).

5. Pince de travail selon l'une ou l'ensemble des revendications précédentes, caractérisée en ce qu'il est prévu dans les parties actives (10, 20) des corps formant bloc (19, 21) orientés perpendiculairement à l'axe longitudinal des parties actives (10, 20), dont l'un (par exemple 19) présente une rainure (22) arrondie dans son fond et l'autre (par exemple 21) une saillie (23) se mettant en prise dans la rainure (22), la saillie (23) présentant de plus petites dimensions que la rainure (22).

6. Pince de travail selon l'une ou l'ensemble des revendications précédentes, caractérisée en ce que les parties actives (10, 20) sont équipées, dans la zone antérieure sur leurs côtés orientés l'un vers l'autre, de rainures (24 et 25) s'étendant dans le sens de l'axe longitudinal des parties actives (10, 20).

7. Pince de travail selon l'une ou l'ensemble des revendications précédentes, caractérisée en ce que la première partie active (10) est de section ronde et se rétrécit en cône dans le sens longitudinal jusqu'à l'extrémité libre et la rainure (24) dans la seconde partie active (20) a une dimension telle qu'elle reçoit l'extrémité de la première partie active (10).

8. Pince de travail selon l'une ou l'ensemble des revendications précédentes, caractérisée en ce que le côté intérieur de la seconde partie active (20) présente une surface cannelée (26).

9. Pince de travail selon l'une ou l'ensemble des revendications précédentes, caractérisée en ce qu'il est prévu dans la première partie active (10) sur le côté intérieur une rainure (27) s'étendant dans l'axe longitudinal de la première partie active (10), qui s'ouvre vers le côté et vers l'extrémité libre, l'ouverture étant en forme d'entonnoir (en 28).

10. Pince de travail selon l'une ou l'ensemble des revendications précédentes, caractérisée en ce qu'elle comporte une arête d'appui (29) sur la première partie active (10), qui s'étend perpendiculairement à l'axe de l'articulation (5) et perpendiculairement à l'axe longitudinal de la première partie active (10) et qui est formée sur le corps formant bloc (19).

11. Pince de travail selon l'une ou l'ensemble des revendications précédentes, caractérisée en ce qu'une butée (44) est disposée parallèlement à la rainure (22) du corps formant bloc (19) par-dessus le bord délimitant la rainure (22) vers la zone d'articulation.

12. Pince de travail selon l'une ou l'ensemble des revendications précédentes, caractérisée en ce que la première partie active (10) se termine en direction du corps formant bloc (19) avec interposition d'une gorge circulaire (30).

13. Pince de travail selon l'une ou l'ensemble des revendications précédentes, caractérisée en ce que la seconde partie active (20) est en forme de corps quadrangulaire (32) s'effilant de façon conique vers l'avant, qui se rétrécit depuis corps formant bloc (21) jusqu'à l'extrémité libre et qui présente une forme d'enclume (en 31) à son extrémité libre.

14. Pince de travail selon l'une ou l'ensemble des revendications précédentes, caractérisée en ce qu'il est prévu à la transition entre le corps quadrangulaire (32) et le corps formant bloc (21) un guide à gorge (33).
